# EUROPEAN PATENT APPLICATION

(11) **EP 3 981 844 A1**
(43) Date of publication of application: **13.04.2022**
(21) Application number: 20822433.7
(22) Date of filing: 01.06.2020
(51) Int. Cl.: C09D 5/14

(54) **REVERSIBLE PROTECTIVE MATERIAL WITH FUNCTION OF INHIBITING GROWTH OF BACTERIA AND MOLD FOR CULTURAL RELICS**

(30) Priority: 10.06.2019 CN 201910497645
(71) Applicant: Shanghai University, Shanghai 200444 (CN)
(72) Inventor: HUANG, Xiao, Shanghai 200444 (CN); ZHANG, Wenjin, Shanghai 200444 (CN); LUO, Hongjie, Shanghai 200444 (CN); CHEN, Xueping, Shanghai 200444 (CN)
(74) Representative: Leinweber & Zimmermann
(86) International application number: PCT/CN2020/093751
(87) International publication number: WO 2020/248860

(57) **Abstract**

The present invention provides a type of reversible cultural relics protection material with function of inhibiting growth of bacteria and molds. The reversible cultural relic protection material is selected from at least one of linalool, camphene, pinene, camphor, borneol, thymol, coumarin, ethyl maltol, cyclododecane, a compound that is solid at ambient temperature and contains a p-methylisopropylcyclohexane structure, and solid cycloalkane. The reversible cultural relic protection material provided by the present invention has the advantages of simple preparation and use methods, good antibacterial efficiency, and at the same time, it can temporarily solidify the cultural relics.

## Description

### TECHNICAL FIELD

The invention belongs to the cross field of antibacterial technology and cultural heritage protection, and specifically relates to a plurality of antibacterial coating agents.

### BACKGROUND

Natural plant spices are the most important secondary metabolites in plants, and are mainly present in flowers, leaves, and fruits of plants. They have unique physical and chemical properties, for example, their certain stimulation can enable the olfactory system of animals, especially human beings to produce a stronger response, thereby playing a role in prompting; the relatively strong volatility of the aromatic compound has an auxiliary promoting effect on fragrance emission, so that molecules can diffuse in the air more uniformly and quickly; their high permeability can penetrate deep into the interior of a variety of materials, and achieve the effect of slow diffusion therein. They are widely used in agriculture, environment, food, medicine, and other fields. Common natural plant spices include rose essential oil, jasmine essential oil, linalool, menthol, menthone, limonene, pinene, camphor, borneol, and thymol, etc.

According to the theory that carbon atoms have a regular tetrahedral configuration, six carbon atoms in the cyclohexane molecule can form a six-membered ring in two different spatial forms, namely a boat conformation and a chair conformation of cyclohexane, under the condition that the bond angle (109.5°) is kept unchanged. Due to the interaction of the groups, the chair conformation is much more stable, and cyclohexane is almost completely chair conformation at normal temperature. A compound with p-methylisopropylcyclohexane structure, wherein methyl and isopropyl are trans-structures, has a certain volatility due to the instability of a six-membered ring, and is part of natural plant flavors, wherein partial derivatives such as menthol and menthone also have irritation.

The environmental conditions around cultural relics are very complicated, and bacteria or fungi often grow on the surface of the cultural relics in a relatively humid environment. Therefore, it is necessary to perform an antibacterial treatment on the cultural relics.

### SUMMARY

In view of the above problems, the purpose of the present invention is to provide an antibacterial coating agent for cultural relics.

Here, the present invention provides an application of various types of volatile solids as antibacterial materials for cultural relics, wherein the volatile solids are selected from at least one of linalool, camphene, pinene, camphor, borneol, thymol, coumarin, ethyl maltol, cyclododecane, a compound that is solid at ambient temperature and contains a p-methylisopropylcyclohexane structure, and solid cycloalkane.

The antibacterial material for cultural relics (antibacterial coating agent) provided by the present invention is simple in preparation and use methods, has good antibacterial efficiency, and can play a temporary shape fixing role on the cultural relics.

Preferably, the compound that is solid at ambient temperature and contains a p-methylisopropylcyclohexane structure is a compound of formula (I), 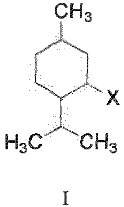 wherein X is selected from -OH, F-, Cl-, Br-, I-, CH₃NH-, HSO₄-, -C(=O)NHCH₂CH₃ or R₅COO-, R₅ is selected from any one of - CH(OH)CH₃ and -CH₃.

Preferably, the antibacterial material for cultural relics is added into a pressure spraying tank and then coated on the surface of the cultural relics to form an antibacterial coating.

Preferably, the pressure spraying tank also contains a boosting agent, and the mass ratio of the volatile solid to the boosting agent is 1 to 3.

Preferably, the boosting agent is selected from one or more of ethane, propane, and butane.

Preferably, the antibacterial material for cultural relics is melted or dissolved in an organic solvent and then coated on the surface of the cultural relics to form an antibacterial coating.

Preferably, the organic solvent is selected from one or more of methanol, ethanol, n-propanol, isopropanol, ethyl acetate, n-hexane, cyclohexane or diethyl ether; preferably ethanol, isopropanol, or cyclohexane.

Preferably, the material of the cultural relics is made of any one of metal materials, inorganic materials, organic materials, and natural materials.

The antibacterial material for cultural relics provided by the present invention can form a coating on the surface of the cultural relics, even enter the cultural relics in a penetrating or diffusing way, while playing an antibacterial effect. The coating also has certain mechanical strength, can strengthen the cultural relic product to a certain extent, will not change the structure and properties of the cultural relic product when removed, and can be removed from the cultural relic product body without leaving a residue. Therefore, the use of this coating is particularly important in the field of cultural relic protection. Moreover, the antibacterial materials of cultural relics have high safety coefficients, and have little influence on the cultural relics, the protection staff, and the surrounding environment with proper use.

Compared with the prior art, the present invention provides an antibacterial coating agent, which can prevent the growth of the original bacteria of the cultural relics and prevent the infection and erosion of exogenous bacteria while temporarily fixing the culture relic. The antibacterial coating agent is a compound that is insoluble in water, controllable in volatilization, and solid at normal temperature. The antibacterial coating agent has the advantages of simple preparation method, good safety, high antibacterial efficiency, and endows the existing materials with new functions.

The results show that the antibacterial coating formed by the antibacterial coating agent has a certain inhibiting effect on Gram-negative bacteria such as *Escherichia coli,* and also has a certain inhibiting effect on the growth of fungus organisms such as *Penicillium.*

### DESCRIPTION OF DRAWINGS

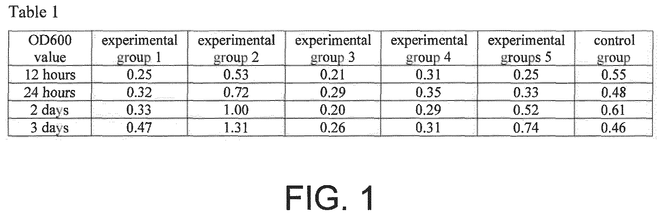

FIG. 1 is a Table 1 that shows the results of bacterial resistance testing of experimental groups 1 to 5 and a control group.

### DETAILED DESCRIPTION

The present invention will be further described below through the following embodiments. It should be understood that the following embodiments are only used to illustrate the present invention, not to limit the present invention.

The present invention provides a variety of antibacterial coating agents, which comprise the following components: one or more of common natural plant spices and compounds with characteristic structures.

The antibacterial coating agent provided by the present invention has the effect of controllable volatilization in outdoor and indoor environments.

In some embodiments, the antibacterial coating agent is selected from one or more of natural plant spices such as linalool, menthol, camphene, pinene, camphor, borneol, thymol, coumarin, ethyl maltol, etc., and is preferably menthol, thymol, and coumarin.

In some embodiments, the antibacterial coating agent is further selected from one or more of compounds that are solid at a certain ambient temperature and contain a p-methylisopropylcyclohexane structure.

The compound can be represented by formula (I):

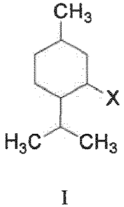

X can be selected from F-, Cl-, Br-, I-, CH₃NH-, HSO₄-, -C(=0)NHCH₂CH₃, or R₅COO-.

Wherein R₅ can be selected from any one of -CH(OH)CH₃ and -CH₃.

In a preferred embodiment, the antibacterial coating agent is selected from the group consisting of menthyl lactate (X in formula (I) is -OOCCH(OH)CH₃), menthyl acetate (X in formula (I) is CH₃COO-) and ethyl menthane carboxamide ((X in formula (I) is -C(=O)NHCH₂CH₃)).

When the antibacterial coating agent of the present invention has a chiral center, it may adopt at least one of a racemate and a chiral isomer.

The antibacterial coating agent provided by the present invention can also be used as a temporary solid material for cultural relics, which can play a role in reversible protection of the cultural relics.

The antibacterial coating agent provided by the present invention is applied to the cultural relics to have an antibacterial effect on the cultural relics, and at the same time play a role of temporary solidification.

When the culture relic is movable, it can be applied to its outer surface. When the cultural relic is not movable, it can be applied to its exposed surface.

The material of the cultural relic is not particularly limited, as long as it is not damaged by the antibacterial coating agent of the present invention, and can be selected from, for example, metal material such as copper and its alloys and iron and its alloys; inorganic materials such as ceramics, porcelain, glass, colored glaze and enamel; organic materials such as wood, paper, and silk; and natural materials such as soil and rock, preferably porcelain, glass, wood, paper, soil, and rock.

In some embodiments, the antibacterial coating agent is melted and coated on the surface of the cultural relic, and an antibacterial coating is formed after solidification.

In some embodiments, the antibacterial coating agent is physically mixed with an organic solvent, applied to the surface of the cultural relic, and dried to obtain an antibacterial coating. The drying can be natural drying or heating, such as infrared heating, for example, to volatilize the organic solvent.

The volume ratio of the coating agent to the organic solvent may be any ratio greater than 5.

The organic solvent can be selected from one or more of methanol, ethanol, n-propanol, isopropanol, ethyl acetate, n-hexane, cyclohexane, or diethyl ether, preferably one or more of ethanol, isopropanol, or cyclohexane.

The above-mentioned coating method is not particularly limited, and may be a coating method known to those skilled in the art.

The coating time is preferably 5 seconds to 30 minutes, more preferably 20 seconds to 1 minute.

In some embodiments, the antibacterial coating agent is added into a pressure spraying tank, sprayed on the surface of the cultural relic, and dried (for example, naturally dried) to obtain the antibacterial coating.

The mass ratio of the coating agent to the boosting agent in the spraying tank can be any ratio of 1 to 3.

The boosting agent may be a fluid capable of dissolving the antibacterial coating agent and vaporizing at atmospheric pressure, for example, may be selected from one or more of ethane, propane, and butane.

The internal pressure of the spraying tank can be 300 to 600 kPa.

The obtained antibacterial coating has certain interaction with the cultural relic substrate, and has good adhesion when the cultural relic needs to be subjected to antibacterial protection. When the cultural relics need to be extracted and further repaired, the cultural relics have the effect of controllable volatilization, and the antibacterial coating can be removed by controllable volatilization. The method for removing the antibacterial coating can be as follows: the cultural relics coated with the antibacterial coating are placed in places with good ventilation conditions and are subjected to natural sublimation of the antibacterial coating, or the sublimation of the antibacterial coating agent is accelerated by heating or blowing, or the sublimation of the antibacterial coating agent is slowed down by low temperature plastic film coating. The above-mentioned heating method is preferably infrared heating.

The coating can be used for antibacterial coating on the surface or inside of the cultural relic protection, because the volatile steam still exists to surround the cultural heritage product within 10 days after the coating is removed and the good antibacterial performance can be still maintained.

In the present invention, the antibacterial coating agent can prevent the growth of the original bacterial of the cultural relics and prevent the infection and erosion of exogenous bacteria while temporarily fixing the cultural relic. The antibacterial coating agent is a compound which is insoluble in water, controllable in volatilization, and solid at normal temperature. The antibacterial coating agent has the advantages of simple preparation method, good safety, high antibacterial efficiency, and endows the existing materials with new functions.

The results show that the antibacterial coating formed by the antibacterial coating agent has the effects of inhibiting the growth and partially killing bacteria such as *Escherichia coli* within 7 days, and has the effect of inhibiting the growth and partially killing mold such as *Penicillium* within 30 days.

Hereinafter, the present invention will be further described with the following examples. It should be understood that the following examples are used to explain this invention and do not mean to limit the scope of this invention. Any non-essential improvements and modifications made by a person skilled in the art based on this invention all fall into the protection scope of this invention. The specific process parameters below are only exemplary, and a person skilled in the art can choose proper values within an appropriate range according to the description, and are not restricted to the specific values shown below.

### Example 1

### Experimental group 1

A) The menthol was melted at a temperature of 50 °C, and made into a cube of 1 mm^{∗}1 mm^{∗}1 mm, waiting for it to solidify.
B) The block was putted into an E. coli solution with an OD600 value of 0.45, and the growth of the bacteria was observed.

### Experimental group 2

A) The menthyl lactate was melted at a temperature of 50 °C, and made into a cube of 1 mm^{∗}1 mm^{∗}1 mm, waiting for it to solidify.
B) The block was putted into an E. coli solution with an OD600 value of 0.45, and the growth of the bacteria was observed.

### Experimental group 3

A) The ethyl maltol was melted at a temperature of 110 °C, and made into a cube of 1 mm^{∗}1 mm^{∗}1 mm, waiting for it to solidify.
B) The block was putted into an E. coli solution with an OD600 value of 0.45, and the growth of the bacteria was observed.

### Experimental group 4

A) The coumarin was melted at a temperature of 90 °C, and made into a cube of 1 mm^{∗}1 mm^{∗}1 mm, waiting for it to solidify.
B) The block was putted into an E. coli solution with an OD600 value of 0.45, and the growth of the bacteria was observed.

### Experimental group 5

A) The cyclododecane was melted at a temperature of 70 °C, and made into a cube of 1 mm^{∗}1 mm^{∗}1 mm, waiting for it to solidify.
B) The block was putted into an E. coli solution with an OD600 value of 0.45, and the growth of the bacteria was observed.

### Control group

The growth of bacteria was observed with an E. coli bacteria solution with an OD600 value of 0.45.

The antibacterial properties of bacterial in the experimental groups 1 to 5 and the control group were tested, and the OD600 values represent the growth of bacterial cells. The lower the value, the lower the cell content in the bacterial solution, that is, the more excellent each antibacterial property of the materials. The test results are shown in Table 1 of FIG. 1.

As can be seen from Table 1, the OD600 value of the experimental group is 0.21 to 0.55 at 12 hours, the OD600 value of the experimental group 3 is the lowest, and the OD600 value of the control group is 0.55; the OD600 value of the experimental group is 0.29 to 0.72 at 24 hours, and the OD600 value of the experimental group 3 is the lowest, and the OD600 value of the control group is 0.48; the OD600 value of the experimental group is 0.20 to 1.00 at 2 days, the OD600 value of the experimental group 3 is the lowest, and the OD600 value of the control group is 0.61; the OD600 value of the experimental group is 0.26 to 1.31 at 3 days, the OD600 value of group 3 is the lowest, and the OD600 value of the control group is 0.47. It shows that the antibacterial agents provided by the present invention have good antibacterial effects within 3 days except the experimental group 2.

### Example 2

### Experimental group 1

The menthol was melted at a temperature of 50 °C, and directly coated on the surface of the soil substrate containing *Penicillium* before it solidified, waiting for it to solidify naturally. The soil matrix *Penicillium* came from the spore suspension inoculation, the spore suspension has an OD600 value of 0.145 and a volume of 1 ml.

### Experimental group 2

The menthol solid was putted into a spraying tank, the boosting agent was propane, the internal pressure was 500 kPa, and the mass ratio of menthol to propane was 3:1.

It was sprayed on the surface of the soil substrate containing *Penicillium* at room temperature and waited for it to solidify naturally. The soil matrix *Penicillium* came from the spore suspension inoculation, the spore suspension had an OD600 value of 0.145 and a volume of 1 ml.

### Experimental group 3

The menthol was physically mixed with an organic solvent at a temperature of 40 °C, the solvent was ethanol, and the mass ratio of menthol to the organic solvent was 10:1.

It was dripped on the surface of the soil substrate containing *Penicillium* at room temperature, and the solvent was naturally solidified after volatilizing. The soil matrix *Penicillium* came from the spore suspension inoculation, the spore suspension had an OD600 value of 0.145 and a volume of 1 ml.

### Control group

A soil matrix containing *Penicillium* was taken and cultured under the same conditions as the experimental group. The soil matrix *Penicillium* came from the spore suspension inoculation, the spore suspension had an OD600 value of 0.145 and a volume of 1 ml.

The antibacterial properties of the mold of the experimental groups 1 to 3 and the control group were tested (referring to the test standard GJB 150.10A-2009 military equipment environmental test method, mold test), and the test results are shown below.

The antibacterial effect of the coating on *Penicillium:* there was no growth of *Penicillium* in the experimental group on the 10th day, and the growth coverage of *Penicillium* in the control group was 25% of the exposed surface of the experimental sample; there was no growth of *Penicillium* in the experimental group on the 20th day, and the growth coverage of *Penicillium* in the control group was 35%; there was no growth of *Penicillium* in the experimental group on the 30th day, and the growth coverage area of *Penicillium* in the control group was 45%. It shows that the antibacterial coating provided by the present invention had a certain antifungal effect within 30 days.

### Example 3

### Experimental group 1

The menthol solid was putted into a spraying tank, the boosting agent was propane, the internal pressure was 500 kPa, and the mass ratio of menthol to propane was 3:1.

It was sprayed on the surface of the sterilized soil substrate at room temperature and waited for it to solidify naturally.

### Experimental group 2

Menthol was melted at a temperature of 50 °C, and directly coated on the surface of the sterilized soil substrate before it solidified, waiting for it to solidify naturally.

### Experimental group 3

The menthol was physically mixed with an organic solvent at a temperature of 40 °C, the solvent was ethanol, and the mass ratio of menthol to the organic solvent was 10:1.

It was dripped on the surface of the sterilized soil substrate at room temperature, waiting for the solvent to solidify naturally after volatilizing.

After 3 days, the antibacterial coating of the experimental group was removed and infected with exogenous mold.

The antibacterial properties of the mold of experimental groups 1 to 3 were tested (referring to the test standard GJB 150.10A-2009 Military Equipment Environmental Test Method, Mold Test), and the test results are shown below.

The antibacterial effect on *Penicillium* after the coating was removed: there was no growth of *Penicillium* in the experimental group during 1 to 10 days. It shows that the residual steam of the antibacterial coating provided by the present invention still has a certain antifungal effect after the antibacterial coating is removed within 10 days.

## Claims

1. An application of various types of volatile solids as antibacterial materials for cultural relics, wherein the volatile solids are selected from at least one of linalool, camphene, pinene, camphor, borneol, thymol, coumarin, ethyl maltol, cyclododecane, a compound that is solid at ambient temperature and contains a p-methylisopropylcyclohexane structure, and solid cycloalkane.

2. The application according to claim 1, wherein the compound that is solid at ambient temperature and contains a p-methylisopropylcyclohexane structure is a compound of formula (I), 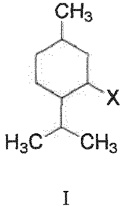 X is selected from -OH, F-, Cl-, Br-, I-, CH₃NH-, HSO₄-, -C(=O)NHCH₂CH₃ or R₅COO-, and
R₅ is selected from any one of -CH(OH)CH₃ and -CH₃.

3. The application according to claim 1 or 2, wherein the volatile solids are also used as temporary solid materials for cultural relics.

4. The application according to any one of claims 1 to 3, wherein the volatile solids are added into a pressure spraying tank and then coated on the surface of the cultural relics to form an antibacterial coating.

5. The application according to claim 4, wherein the pressure spraying tank also contains a boosting agent, and the mass ratio of the volatile solid to the boosting agent is 1 to 3.

6. The application according to claim 5, wherein the boosting agent is selected from one or more of ethane, propane, and butane.

7. The application according to any one of claims 1 to 3, wherein the volatile solids are melted or dissolved in an organic solvent and then coated on the surface of the cultural relics to form an antibacterial coating.

8. The application according to claim 7, wherein the organic solvent is selected from one or more of methanol, ethanol, n-propanol, isopropanol, ethyl acetate, n-hexane, cyclohexane or diethyl ether; preferably ethanol, isopropanol, or cyclohexane.

9. The application according to any one of claims 1 to 8, wherein the material of the cultural relics is made of any one of metal materials, inorganic materials, organic materials, and natural materials.
